# EUROPÄISCHE PATENTSCHRIFT

(11) **EP 3 722 649 B1**
(45) Veröffentlichungstag und Bekanntmachung des Hinweises auf die Patenterteilung: **03.05.2023**
(21) Anmeldenummer: 20165780.6
(22) Anmeldetag: 26.03.2020
(51) Int. Cl.: F16L 41/12, A01G 25/02, A62C 35/68, F16B 2/10

(54) **ROHRSCHELLE**
PIPE CLIP
COLLIER DE SERRAGE

(30) Priorität: 10.04.2019 DE 102019109518
(43) Veröffentlichungstag der Anmeldung: 14.10.2020
(73) Patentinhaber: Salzgitter Mannesmann Stahlhandel GmbH, 40476 Düsseldorf (DE)
(72) Erfinder: Meister, Steffen, 30900 Wedemark (DE)
(74) Vertreter: Stoffregen, Hans-Herbert

(56) Entgegenhaltungen:
- WO-A2-01/59352
- DE-U1- 29 904 088
- FR-A- 1 155 994
- US-A- 2 239 651

## Beschreibung

Die Erfindung bezieht sich auf eine Rohrschelle, insbesondere Sprinklerrohrschelle bzw. Anbohrschelle zum Verbinden eines ersten eine Öffnung aufweisenden Rohres mit einem zweiten Rohr, umfassend ein einen auf die Öffnung ausrichtbaren Anschlussstutzen aufweisendes und mit dem zweiten Rohr verbindbares Gehäuseteil mit den Anschlussstutzen umgebenden ersten und zweiten flanschartigen Abschnitten sowie eine das erste Rohr umschließende und mit dem Gehäuseteil verbindbare Spanneinrichtung, die über eine auf einem Gewindeabschnitt eines Spannbolzens angeordnete Mutter verspannbar ist, wobei die Spanneinrichtung einen ersten und einen zweiten Spannarm mit jeweils einem ersten und zweiten Endabschnitt umfasst, wobei in jedem ersten Endabschnitt eine erste Durchbrechung zur Bildung eines Bügels ausgebildet ist, mittels dessen der Spannarm an dem ersten bzw. zweiten flanschartigen Abschnitt des Gehäuseteils verschwenkbar befestigt ist, und wobei in dem zweiten Endabschnitt des ersten Spannarms eine zweite Durchbrechung ausgebildet ist, in der der Spannbolzen aufgenommen ist.

Eine entsprechende Rohrschelle ist der WO 01/59352 A2 oder US 2,239,651 A zu entnehmen.

Eine Rohrschelle nach der WO 03/069210 A1 dient zum Verbinden eines ersten eine Öffnung aufweisenden Rohres mit einem zweiten Rohr und umfasst ein einen auf die Öffnung ausrichtbaren Anschlussstutzen aufweisendes und mit dem zweiten Rohr verbindbares Gehäuseteil mit den Anschlussstutzen umgebenden ersten und zweiten flanschartigen Abschnitten sowie ein das erste Rohr umschließendes und mit dem Gehäuseteil verbindbares Spannelement, wie Drahtbügel oder Metallband. Der schlaufen-/ösenartig ausgebildete erste Endabschnitt ist von einem stiftartigen Element durchsetzt, das in eine von rohrabgewandter Oberseite des ersten flanschartigen Abschnitts ausgehende Ausnehmung einsetzbar ist, die in eine zum Durchsetzen des Spannelementes geeignete Durchbrechung übergeht, deren Querschnitt kleiner als der wirksame Querschnitt des stiftartigen Elementes ist.

Die EP 0 598 151 A1 betrifft eine Rohrschelle mit einem Gehäuseteil. Das Gehäuseteil ist asymmetrisch ausgebildet und weist einen sattelförmigen Basisabschnitt auf, der an einem Ende eine Öffnung zum Einbringen einer Spannmutter aufweist und an seinem anderen Ende zapfenartig ausgebildet ist, um einen der Endabschnitte eines Spannbügels zu sichern. Bei dem Spannelement handelt es sich um einen zwei Schenkel aufweisenden Tragbügel, um eine Befestigung an dem zapfenartig ausgebildeten Endabschnitt zu ermöglichen.

Die DE 20 2004 012 562 U1 betrifft eine Sprinklerschelle zum Anbringen von Sprinklerspringköpfen an einem Rohr, wobei die Sprinklerschelle aus einem im Wesentlichen halbkreisförmigen Anbohrschellenteil und einem im Wesentliche halbkreisförmigen Rohrschellenteil besteht, an deren Enden zum Verbinden der beiden Teile radial nach außen abgebogene Flansche angeordnet sind. Dabei ist vorgesehen, dass zwei sich in zusammengebautem Zustand gegenüberliegende Flansche mit Elementen zum Herstellen einer Steckverbindung ausgestattet sind.

Der vorliegenden Erfindung liegt das Problem zugrunde, eine Rohrschelle der eingangs genannten Art so weiterzubilden, dass eine problemlose Montage mit der Rohrschelle möglich ist, also insbesondere Teile der Rohrschelle sich nicht lösen können. Auch soll beim Transport eine Unverlierbarkeit ermöglicht werden. Ferner soll mit konstruktiv einfachen Maßnahmen eine sichere Verbindung der Rohrschelle mit dem ersten Rohr möglich sein, wobei im erforderlichen Umfang Anpresskräfte über die Spanneinrichtung einleitbar sind. Auch soll sichergestellt sein, dass beim Anziehen der Spanneinrichtung die hierzu benutzte Mutter leicht zugänglich ist. Ferner soll ein sicheres Fixieren der Spanneinrichtung möglich sein, ohne dass dieses über zwei Muttern zu sichern ist. Auch soll beim Anziehen der Spanneinrichtung ein überaus kraftschlüssiges Anliegen an dem ersten Rohr erfolgen.

Erfindungsgemäß wird das Problem im Wesentlichen dadurch gelöst, dass bei in den flanschartigen Abschnitten eingehängten Spannarmen in die jeweilige erste Durchbrechung des ersten Endabschnitts des Spannarms ein Sicherungselement eingesetzt und in einem Rand dieser Durchbrechung verrastet ist, das in verschwenktem Zustand des Spannarms an einem von dem ersten bzw. zweiten flanschartigen Abschnitt ausgehenden Anschlag anliegt und ein Aushängen des Spannarms verhindert.

Dadurch, dass in jeweilige Durchbrechungen ein Sicherungselement einsetzbar ist, ist sichergestellt, dass beim Transport und Montieren ein Spannarm nicht verloren gehen bzw. beim Spannen von dem flanschartigen Abschnitt des Gehäuseteils herausrutschen kann.

Gegenüber dem Stand der Technik wird insbesondere auch der Vorteil erreicht, dass ein symmetrisches Anziehen ermöglicht wird, ohne dass eine einseitige Belastung des Gehäuseteils durch einseitiges Anziehen erfolgt.

Eine vereinfachte Montage wird insbesondere dadurch erreicht, dass in dem zweiten Endabschnitt des zweiten Spannarms eine schlitzförmige Aussparung ausgebildet ist, in die der die Mutter durchsetzende Gewindeabschnitt des Schraubenbolzens einsetzbar ist und gegen die die Mutter verspannbar ist.

Von Vorteil ist auch, dass zumindest der zweite Endabschnitt des zweiten Spannarms flanschartig ausgebildet ist und eine Abstützfläche für die Mutter bzw. einen von dieser ausgehenden Flansch bildet, die derart zu einer Längsachse des Anschlussstutzens ausgerichtet ist, dass der über die Mutter ausgerichtete Gewindeabschnitt des Schraubenbolzens mit seiner Längsachse senkrecht zu der Längsachse des Anschlussstutzens verläuft. Die Mutter ist leicht zugänglich und kann von einer Seite angezogen werden.

Eine optimale Ausrichtung des Schraubenbolzens wird bevorzugt dadurch erreicht, dass der zweite Endabschnitt des ersten Spannarms flanschartig ausgebildet ist und eine die Durchbrechung aufweisende Abstützfläche bildet, wobei die Abstützflächen der zweiten Endabschnitte parallel zueinander und zu der Längsachse des Anschlussstutzens verlaufen und vorzugsweise einen Abstand zueinander aufweisen, der im Wesentlichen dem Durchmesser des ersten Rohres entspricht.

Ein symmetrisches Anziehen wird ferner dadurch erreicht, dass die Spannarme symmetrisch zu der Längsachse des Anschlussstutzens angeordnet sind und dass der zweite Endabschnitt des ersten bzw. zweiten Spannarms jeweils rohrseitig eine Spannfläche aufweist, die im verspannten Zustand an Oberfläche des ersten Rohres anliegt.

Um ein Verschwenken des Spannarms relativ zu dem Gehäuseteil zu ermöglichen, wodurch die Montage weiter vereinfacht wird, ist vorgesehen, dass in dem ersten Endabschnitt des Spannarms eine Durchbrechung zur Bildung eines Bügels ausgebildet ist, wobei der Spannarm mittels des Bügels in zusammengesetztem Zustand an dem ersten bzw. zweiten flanschartigen Abschnitt des Gehäuseteils verschwenkbar befestigt, wie eingehängt ist, und wobei der Bügel gegen eine in dem ersten bzw. zweiten flanschartigen Abschnitt ausgebildete Mulde anliegt. Durch die Verschwenkbarkeit der Spannarme wird die Montage vereinfacht. Ferner werden Spannungen ausgeglichen.

Zur Sicherung des Bügels gegen ein Herausrutschen ist vorgesehen, dass die Mulde des ersten bzw. zweiten flanschartigen Abschnitts des Gehäuseteils jeweils durch einen Vorsprung, wie Nase, begrenzt ist.

Damit die Spannarme im Lieferzustand unverlierbar mit dem Gehäuseteil verbunden sind, ist erfindungsgemäß vorgesehen, dass in die Durchbrechung des ersten Endabschnitts jeweils das Sicherungselement, wie Sicherungsclip, einsetzbar ist, welches in verschwenktem Zustand gegen einen von dem ersten bzw. zweiten flanschartigen Abschnitt ausgehenden Anschlag anliegt und ein Aushängen verhindert. Das Sicherungselement ist mit einem Randabschnitt der Durchbrechung verrastbar.

Der erste und zweite flanschartige Abschnitt spannen oberseitig eine gemeinsame Ebene auf, die senkrecht zur Längsachse des Rohrstutzens und parallel zur Längsachse des ersten Rohres verläuft.

Der Schraubenbolzen kann vorzugsweise als Schlossschraube oder als Hammerkopf- bzw. T-Bolzen-Schraube ausgebildet ist.

Weitere Einzelheiten, Vorteile und Merkmale der Erfindung ergeben sich nicht nur aus den Ansprüchen, den diesen zu entnehmenden Merkmalen, sondern auch aus der nachfolgenden Beschreibung von den Zeichnungen zu entnehmenden bevorzugten Ausführungsbeispielen.

Es zeigen:
- Fig. 1: eine Seitenansicht einer mit einem Rohr verbundenen Rohrschelle,
- Fig. 2: einen Schnitt entlang der Linie A-A in Fig. 1,
- Fig. 3: die Rohrschelle nach Fig. 1 in Draufsicht,
- Fig. 4: einen Schnitt entlang der Linie B-B in Fig. 3,
- Fig. 5: eine perspektivische Darstellung der mit dem Rohr verbundenen Rohrschelle in Draufsicht,
- Fig. 6: eine perspektivische Darstellung eines Schnitts entlang der Linie A-A in Fig. 1 von rechts,
- Fig. 7: eine perspektivische Darstellung eines Schnitts entlang der Linie A-A in Fig. 1 von links und
- Fig. 8: eine perspektivische Darstellung der mit dem Rohr verbundenen Rohrschelle in Unteransicht.

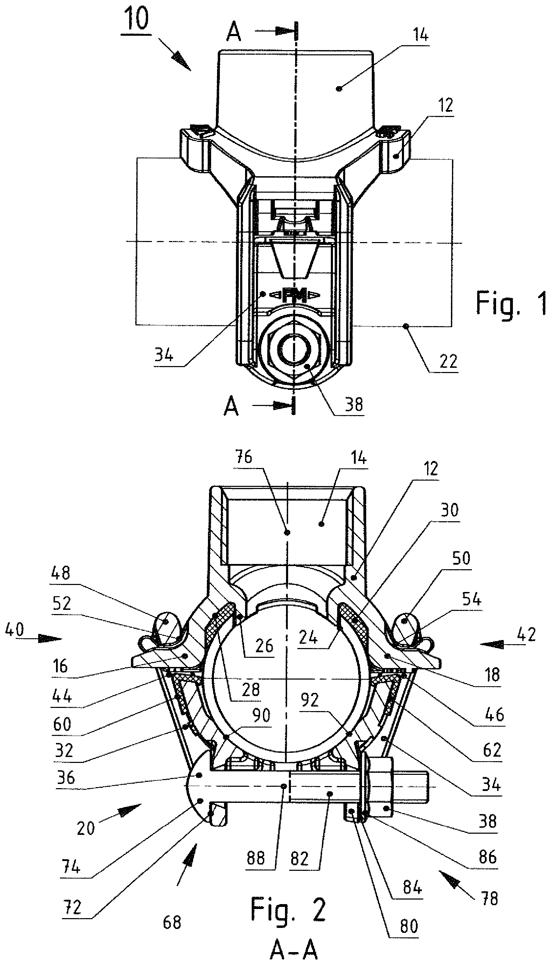

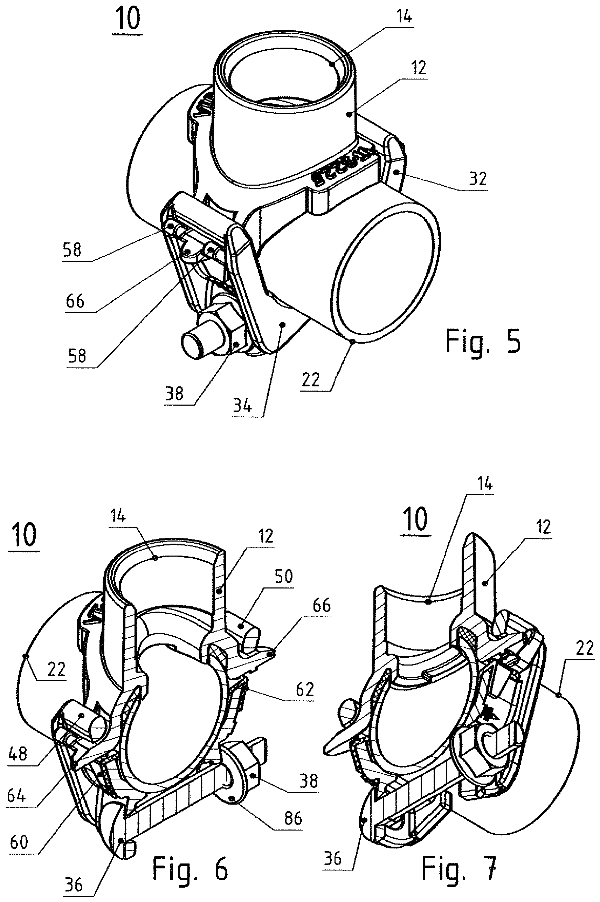

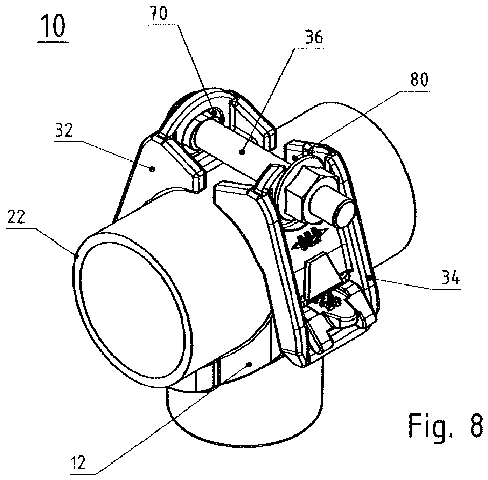

Die Figuren 1 bis 8 zeigen eine Rohrschelle 10, die aus einem Gehäuseteil 12 mit Anschlussstutzen 14 und zu beiden Seiten von diesem verlaufenden flanschartigen ersten und zweiten Abschnitten 16, 18, besteht, wobei das Gehäuseteil 12 über eine Spanneinrichtung 20 um ein erstes Rohr 22 spannbar ist. Das Gehäuseteil 12 ist mit seinem Anschlussstutzen 14, in dem ein zweites Rohr einsetzbar ist, auf eine Öffnung 24 des ersten Rohres 22 ausgerichtet und greift mit einem zylindrischen Abschnitt 26 in diese ein.

Der zylindrische Abschnitt ist von einer Nut 28 umgeben, in der ein Dichtelement 30 eingesetzt ist, um das Gehäuseteil 12 und damit die Rohrschelle 10 gegenüber dem ersten Rohr 10 bzw. dessen Öffnung 24 abzudichten.

Die Spanneinrichtung 20 umfasst zwei mit dem Gehäuseteil verbundene und das erste Rohr zumindest abschnittsweise umschließende Spannarme 32, 34, die über einen als Spannbolzen bezeichneten Schraubenbolzen 36 mit Mutter 38 spannbar sind. Zum Befestigen des ersten bzw. zweiten Spannarms 32, 34 an dem ersten bzw. zweiten flanschartigen Abschnitt 16, 18 ist in einem ersten Endabschnitt 40, 42 der Spannarme 32, 34 jeweils eine erste Durchbrechung 44, 46 derart ausgebildet, dass der erste Endabschnitt 40, 42 jeweils mit dem ersten bzw. zweiten flanschartigen Abschnitt 16, 18 des Gehäuseteils 12 verbindbar, wie einhängbar, ist.

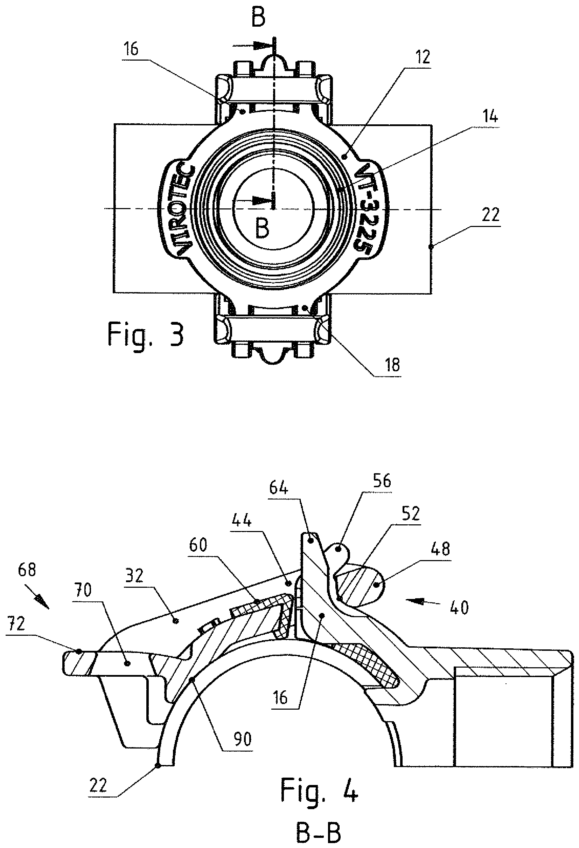

Durch die Durchbrechung 44, 46 in dem ersten Endabschnitt 40, 42 wird ein Bügel 48, 50 gebildet, in den der erste bzw. zweite flanschartige Abschnitt 16, 18 eingreift, wobei der Bügel 48, 50 gegen eine in dem Abschnitt 16, 18 ausgebildete Mulde 52, 54 anliegt, wie dies in der vergrößerten Darstellung gemäß Fig. 4 dargestellt ist.

Um ein unkontrolliertes Herausrutschen der Bügel 48, 50 aus der Mulde 52, 54 bzw. von dem Abschnitt 16, 18 zu verhindern, sind an dem ersten bzw. zweiten flanschartigen Abschnitt 16, 18 Vorsprünge 56, 58, wie Nasen, ausgebildet.

Zwischen den außenseitig die Mulden 52, 52 begrenzenden Vorsprüngen 56, 58 und den sich entlang des Rohrs 22 erstreckenden und in die Anschlussstutzen 13 übergehenden Bereichen des Gehäuseteils 12 wird der jeweilige Bügel 48, 50 positioniert.

Die erste Durchbrechung 44, 46 hat eine Umfangserstreckung derart, dass der erste bzw. zweite Spannarm 32, 34 in den ersten bzw. zweiten flanschartigen Abschnitt eingehängt werden kann. Um ein Aushängen, d.h. ein Verlieren des ersten bzw. zweiten Spannarms 32, 34 zu verhindern, ist erfingungsgemäß jeweils ein Sicherungselement 60, 62 in der ersten Durchbrechung 44, 46 eingesetzt und in einem Rand dieser verrastet, wodurch die erste Durchbrechung 44, 46 flächenmäßig reduziert ist. Des Weiteren ist in Verlängerung der ersten und zweiten flanschartigen Abschnitte 16, 18 ein Vorsprung 64, 66 ausgebildet, der eine Länge derart aufweist, dass beim Verschwenken des ersten oder zweiten Spannarms 32, 34 das Sicherungselement 60, 62 gegen den Vorsprung 64, 66 stößt und somit ein Aushängen des ersten oder zweiten Spannarms 32, 34 verhindert wird.

Insoweit ist insbesondere die Fig. 4 selbsterklärend und offenbart Merkmale, die die Erfindung auszeichnen.

In einem zweiten Endabschnitt 68 des ersten Spannarms 32 ist eine zweite Durchbrechung 70 für den Schraubenbolzen 36 ausgebildet. Die zweite Durchbrechung 70 ist von einer Abstützfläche 72 umgeben, gegen die ein Schraubenkopf 74 des Schraubenbolzens 36 anliegt. Die Anschlagfläche 72 liegt in einer Ebene, die parallel oder im Wesentlichen parallel zu einer Längsachse 76 des Anschlussstutzens 14 verläuft. Mit montierter Mutter 38 ist der Schraubenbolzen 36 mit dem ersten Spannarm 32 unverlierbar verbunden.

Die zweite Durchbrechung 70 hat einen Durchmesser, der sich von der Abstützfläche 72 in Richtung der Längsachse trichterförmig vergrößert, wodurch ein Verschwenken des Schraubenbolzens 36 in der Durchbrechung 70 ermöglicht wird.

In einem zweiten Endabschnitt 78 des zweiten Spannarms 34 ist eine schlitzförmige Ausnehmung 80 ausgebildet, in die ein die Mutter 38 durchsetzendes Gewindeteil 82 einschwenkbar ist. Die schlitzförmige Ausnehmung 80 ist außenseitig von einer Abstützfläche 84 begrenzt, gegen die die Mutter 38 bzw. ein von dieser ausgehender Flansch 86 anliegt. Die Abstützfläche 84 liegt in einer Ebene, die parallel oder im Wesentlichen parallel zu der Längsachse 76 des Anschlussstutzens 14 verläuft.

Folglich ist gewährleistet, dass der über die Mutter 38 ausgerichtete Schraubenbolzen 36 mit seiner Längsachse 86 rechtwinklig zu der Längsachse 76 des Anschlussstutzens 14 verläuft, um ein symmetrisches Anziehen zu gewährleisten und eine einseitige Belastung, d.h. einseitiges Anziehen des Gehäuseteils 12 zu vermeiden.

An einer dem ersten Rohr 22 zugewandten Innenseite sind im Bereich der zweiten Endabschnitte 68, 78 des ersten und zweiten Spannarms 32, 34 jeweils Klemmflächen 90, 92 ausgebildet, mit einer gebogenen Oberfläche, die an den Radius des ersten Rohrs 22 angepasst ist.

Erfindungsgemäß wird eine Rohrschelle 10 zur Verfügung gestellt, die aus dem Gehäuseteil 12 mit Anschlussstutzen 14 mit ersten und zweiten flanschartigen Abschnitten 16, 18 und zwei verschiedenartigen Spannarmen 32, 34 besteht, die jeweils mit dem ersten und zweiten flanschartigen Abschnitt verschwenkbar verbindbar, wie einhängbar, sind, wobei die ersten und zweiten Spannarme 32, 34 mittels des Schraubenbolzens 36 und der Mutter 38 verspannbar sind. Dabei ist die Längsachse 88 des Schraubenbolzens 36 rechtwinklig zu der Längsachse 76 des Anschlussstutzens 14 ausgerichtet. Die Spannarme 32, 34 sind mit dem Gehäuseteil 12 und der Schraubenbolzen 36 mit Mutter 38 ist mit der Durchbrechung 70 des ersten Spannarms 32 unverlierbar verbunden. Der Gewindeteil 82 des Schraubenbolzens 36 kann in die schlitzförmige Ausnehmung 80 im zweiten Endabschnitt 78 des zweiten Spannarms 34 eingehängt werden. Alle Einzelteile der erfindungsgemäßen Rohrschelle sind unverlierbar miteinander verbunden. Dabei erfolgt erfindungsgemäß ein Sichern der Spannarme 32, 34 mittels der Sicherungselemente 60, 62, die verrastbar positioniert werden.

Vorzugsweise bestehen die Bauteile aus Stahlguss oder Sphäroguss, z.B. GGG-50.

Zur Montage ist vorgesehen, dass in das erste Rohr 22 eine Bohrung 24 von z.B. 27 mm eingebracht und anschließend entgratet wird. Sodann wird die Rohrschelle 10 aufgesetzt und der Anschlussstutzen 14 auf die Bohrung 24 ausgerichtet. Anschließend werden die Spannarme 32, 34 eingeschwenkt und der Schraubenbolzen 36 mit Mutter 38 in die schlitzförmige Ausnehmung 80 im Endbereich 78 des zweiten Spannarms 34 eingehängt.

Gegenüber dem Stand der Technik wird der Vorteil erreicht, dass bei der Montage nur die eine Mutter 38 angezogen werden muss. Durch die senkrechte Ausrichtung der Längsachse 88 des Schraubenbolzens 36 zu der Längsachse 76 des Anschlussstutzens 14 ist die Mutter 38 leicht zugänglich und kann von einer Seite angezogen werden.

Des Weiteren wird durch die zwei symmetrisch zur Längsachse 76 angeordneten Spannarme 32, 34 ein symmetrisches Anziehen des Anschlussstutzens 12 gewährleistet, d.h. eine einseitige Belastungen des Anschlussstücks 12, insbesondere der flanschartigen Abschnitte 16, 18, wird vermieden.

## Patentansprüche

1. Rohrschelle (10), insbesondere Sprinklerschelle bzw. Anbohrschelle, zum Verbinden eines ersten eine Öffnung (24) aufweisenden Rohres (22) mit einem zweiten Rohr, umfassend einen Spannbolzen (36), eine Mutter (38), ein einen auf die Öffnung (24) ausrichtbaren Anschlussstutzen (14) aufweisendes und mit dem zweiten Rohr verbindbares Gehäuseteil (12) mit den Anschlussstutzen (14) umgebenden ersten und zweiten flanschartigen Abschnitten (16, 18) sowie eine das erste Rohr (22) umschließende und mit dem Gehäuseteil (12) verbindbare Spanneinrichtung, die über die auf einem Gewindeabschnitt (82) des Spannbolzens (36) angeordnete Mutter (38) verspannbar ist, wobei die Spanneinrichtung einen ersten und einen zweiten Spannarm (32, 34) mit jeweils einem ersten und zweiten Endabschnitt (40, 42; 68, 78) umfasst, wobei in jedem ersten Endabschnitt (40, 42) eine erste Durchbrechung (44, 46) zur Bildung eines Bügels (48, 50) ausgebildet ist, mittels dessen der jeweilige Spannarm an dem ersten bzw. zweiten flanschartigen Abschnitt (16, 18) des Gehäuseteils (12) verschwenkbar befestigt ist, wobei in dem zweiten Endabschnitt (68) des ersten Spannarms (32) eine zweite Durchbrechung (70) ausgebildet ist, in der der Spannbolzen (36) aufgenommen ist, und wobei die Spannarme (32, 34) in den flanschartigen Abschnitten (16, 18) eingehängt sind,
**dadurch gekennzeichnet,**
**dass** bei den in den flanschartigen Abschnitten (16, 18) eingehängten Spannarmen (32, 34) in die jeweilige erste Durchbrechung (44, 46) des jeweiligen ersten Endabschnitts (40, 42) des Spannarms (32, 34) ein Sicherungselement (60, 62) eingesetzt und in einen Rand dieser Durchbrechung verrastet ist, das in verschwenktem Zustand des Spannarms (32, 34) bei benutzter Rohrschelle an einem von dem ersten bzw. zweiten flanschartigen Abschnitt (16, 18) ausgehenden Anschlag (64, 66) anliegt und ein Aushängen des Spannarms verhindert.

2. Rohrschelle nach Anspruch 1,
**dadurch gekennzeichnet,**
**dass** in dem zweiten Endabschnitt (78) des zweiten Spannarms (34) eine schlitzförmige Aussparung (80) ausgebildet ist, in die der die Mutter (38) durchsetzende Gewindeabschnitt (82) des Spannbolzens (36) einsetzbar und gegen die die Mutter (38) verspannbar ist.

3. Rohrschelle nach Anspruch 1 oder 2,
**dadurch gekennzeichnet,**
**dass** der Anschlussstutzen (14) einen zylindrischen Abschnitt (26) aufweist, der derart ausgebildet ist, dass bei auf die Öffnung (24) ausgerichtetem Anschlussstutzen (14) der zylindrische Abschnitt in die Öffnung (24) eingreift

4. Rohrschelle nach zumindest einem der vorhergehenden Ansprüche,
**dadurch gekennzeichnet,**
**dass** in Verlängerung des ersten und zweiten flanschartigen Abschnitts (16, 18) ein Vorsprung (64, 66) ausgebildet ist, der eine Länge derart aufweist, dass beim Verschwenken des Spannarms (32, 34) das Sicherungselement (60, 62) gegen den Vorsprung (64, 66) stößt.

5. Rohrschelle nach zumindest Anspruch 1,
**dadurch gekennzeichnet ,**
**dass** der zweite Endabschnitt (78) des zweiten Spannarms (34) flanschartig ausgebildet ist und eine Abstützfläche (84) für die Mutter (38) bzw. einen von dieser ausgehenden Flansch (86) bildet, die derart zu einer Längsachse (76) des Anschlussstutzens (14) ausgerichtet ist, dass der über die Mutter (38) ausgerichtete Gewindeabschnitt (82) des Spannbolzens (36) mit seiner Längsachse (88) senkrecht zu der Längsachse (76) des Anschlussstutzens (14) verläuft.

6. Rohrschelle nach zumindest einem der vorhergehenden Ansprüche,
**dadurch gekennzeichnet,**
**dass** jeder Bügel (48, 50) gegen eine in dem ersten bzw. zweiten flanschartigen Abschnitt (16, 18) des Gehäuseteils (12) ausgebildete Mulde (52, 54) anliegt und dass die Mulde (52, 54) des ersten bzw. zweiten flanschartigen Abschnitts (16, 18) des Gehäuseteils (12) randseitig jeweils durch einen Vorsprung (56, 58), wie Nase, zur Sicherung des Bügels (52, 54) begrenzt ist.

7. Rohrschelle nach zumindest einem der vorhergehenden Ansprüche,
**dadurch gekennzeichnet,**
**dass** der zweite Endabschnitt (68) des ersten Spannarms (32) flanschartig ausgebildet ist und eine die Durchbrechung (70) aufweisende Abstützfläche (72) bildet, wobei die Abstützflächen (72, 84) der zweiten Endabschnitte (68, 78) parallel zueinander und zu der Längsachse (76) des Anschlussstutzens (14) verlaufen und vorzugsweise einen Abstand zueinander aufweisen, der im Wesentlichen dem Durchmesser des ersten Rohres (22) entspricht.

8. Rohrschelle nach zumindest einem der vorhergehenden Ansprüche,
**dadurch gekennzeichnet,**
**dass** die Spannarme (32, 34) symmetrisch zu der Längsachse (76) des Anschlussstutzens (14) angeordnet sind.

9. Rohrschelle nach zumindest einem der vorhergehenden Ansprüche,
**dadurch gekennzeichnet,**
**dass** der zweite Endabschnitt (68, 78) des ersten bzw. zweiten Spannarms (32, 34) jeweils rohrseitig eine Spannfläche (90, 92) aufweist, die im verspannten Zustand an Oberfläche des ersten Rohres (22) anliegt.

10. Rohrschelle nach zumindest einem der vorhergehenden Ansprüche,
**dadurch gekennzeichnet,**
**dass** der erste und zweite flanschartige Abschnitt (16, 18) oberseitig eine gemeinsame Ebene aufspannen, die senkrecht zur Längsachse (76) des Rohrstutzens (14) und parallel zur Längsachse des ersten Rohres (22) verläuft.

11. Rohrschelle nach zumindest einem der vorhergehenden Ansprüche,
**dadurch gekennzeichnet,**
**dass** der Spannbolzen (36) als Schlossschraube oder als Hammerkopf- bzw. T-Bolzen-Schraube ausgebildet ist.

## Claims

1. Pipe clip (10), in particular a sprinkler clip or tapping clip, for connecting a first pipe (22) having an aperture (24) to a second pipe, comprising a clamping bolt (36); a nut (38); a housing part (12) connectable to the second pipe and having a connecting piece (14) alignable on the aperture (24) and with first and second flange-like sections (16, 18) surrounding said connecting piece (14); and a clamping device enclosing the first pipe (22) and connectable to the housing part (12), said clamping device being clampable using the nut (38) arranged on a threaded section (82) of the clamping bolt (36), the clamping device comprising a first and a second clamping arm (32, 34) each with a first and second end section (40, 42; 68, 78); a first through-hole (44, 46) being provided in each first end section (40, 42) to form a lever (48, 50) by means of which the respective clamping arm is swivelably fastened to the respective first or second flange-like section (16, 18) of the housing part (12); a second through-hole (70) being provided in the second end section (68) of the first clamping arm (32) and in which the clamping bolt (36) is received; and the clamping arms (32, 34) being attached in the flange-like sections (16, 18),
wherein
when the clamping arms (32, 34) are attached in the flange-like sections (16, 18) a securing element (60, 62) is inserted into the respective first through-hole (44, 46) of the respective first end section (40, 42) of the clamping arm (32, 34), engages in a rim of said through-hole and, in the swiveled state of the clamping arm (32, 34) when the pipe clip is in use, contacts a stop (64, 66) extending from the first or second flange-like section (16, 18) respectively and prevents detachment of the clamping arm.

2. Pipe clip according to claim 1,
wherein
in the second end section (78) of the second clamping arm (34) a slot-like recess (80) is formed into which the threaded section (82) of the clamping bolt (36) passing through the nut (38) is insertable and against which the nut (38) is clampable.

3. Pipe clip according to claim 1 or 2,
wherein
the connecting piece (14) has a cylindrical section (26) which is designed such that when the connecting piece (14) is aligned on the aperture (24) the cylindrical section engages in the aperture (24).

4. Pipe clip according to at least one of the preceding claims,
wherein
in an extension of the first and second flange-like sections (16, 18) a projection (64, 66) is provided having a length such that the securing element (60, 62) pushes against the projection (64, 66) when the clamping arm (32, 34) is swiveled.

5. Pipe clip according to at least claim 1,
wherein
the second end section (78) of the second clamping arm (34) is designed flange-like and forms a contact surface (84) for the nut (38) or for a flange (86) extending therefrom which is aligned relative to a longitudinal axis (76) of the connecting piece (14) such that the threaded section (82) of the clamping bolt (36) aligned using the nut (38) extends with its longitudinal axis (88) perpendicularly to the longitudinal axis (76) of the connecting piece (14).

6. Pipe clip according to at least one of the preceding claims,
wherein
each lever (48, 50) rests against a dip (52, 54) formed in the first and second flange-like section (16, 18) respectively of the housing part (12), and the dip (52, 54) of the first and second flange-like section (16, 18) respectively of the housing part (12) is limited on the rim side by a projection (56, 58) respectively, such as a lug, to secure the lever (52, 54).

7. Pipe clip according to at least one of the preceding claims,
wherein
the second end section (68) of the first clamping arm (32) is designed flange-like and forms a contact surface (72) having the through-hole (70), the contact surfaces (72, 84) of the second end sections (68, 78) running parallel to one another and to the longitudinal axis (76) of the connecting piece (14) and preferably having a distance to one another which substantially corresponds to the diameter of the first pipe (22).

8. Pipe clip according to at least one of the preceding claims,
wherein
the clamping arms (32, 34) are arranged symmetrical to the longitudinal axis (76) of the connecting piece (14).

9. Pipe clip according to at least one of the preceding claims,
wherein
the second end section (68, 78) of the first and second clamping arm (32, 34) respectively has on the pipe side a clamping surface (90, 92) which contacts the surface of the first pipe (22) in the clamped state.

10. Pipe clip according to at least one of the preceding claims,
wherein
the first and second flange-like sections (16, 18) create on the upper side a common plane extending perpendicularly to the longitudinal axis (76) of the connecting piece (14) and parallel to the longitudinal axis of the first pipe (22).

11. Pipe clip according to at least one of the preceding claims,
wherein
the clamping bolt (36) is designed as a carriage bolt or as a hammer-head / T-head bolt.

## Revendications

1. Collier de serrage (10), notamment collier d'arroseur ou collier de centrage pour relier un premier tuyau (22) présentant un orifice (24) à un second tuyau, comprenant un boulon de serrage (36), un écrou (38), un élément de boîtier (12) présentant un embout de raccordement (14) orientable vers l'orifice (24) et reliable au second tuyau avec des premières et secondes sections (16, 18) en forme de bride entourant l'embout de raccordement (14) ainsi qu'un dispositif de serrage entourant le premier tuyau (22) et reliable à l'élément de boîtier (12), lequel élément de serrage est serrable par le biais de l'écrou (38) disposé sur une section filetée (82) du boulon de serrage (36), sachant que le dispositif de serrage comprend un premier et un second bras de serrage (32, 34) avec chacun une première et une seconde section terminale (40, 42 ; 68, 78), sachant qu'est constituée dans chaque première section terminale (40, 42) une première découpe (44, 46) pour former un étrier (48, 50) au moyen duquel le bras de serrage respectif est fixé à la première ou la seconde section en forme de bride (16, 18) de l'élément de boîtier (12) de manière à pivoter, sachant que dans la seconde section terminale (68) du premier bras de serrage (32) est constituée une seconde découpe (70) dans laquelle est logé le boulon de serrage (36), et sachant que les bras de serrage (32, 34) sont accrochés dans les sections en forme de bride (16, 18),
**caractérisé en ce**
**qu'**au niveau des bras de serrage (32, 34) accrochés dans les sections en forme de bride (16, 18), un élément de sûreté (60, 62) est inséré dans la première découpe respective (44, 46) de la première section terminale (40, 42) du bras de serrage (32, 34) et encliqueté dans un bord de cette découpe, lequel élément de sûreté repose, à l'état pivoté du bras de serrage (32, 34), lorsque le collier de serrage est utilisé, sur une butée (64, 66) partant de la première ou seconde section en forme de bride (16, 18) et empêche un décrochage du bras de serrage.

2. Collier de serrage selon la revendication 1,
**caractérisé en ce**
**qu'**est constitué dans la seconde section terminale (78) du second bras de serrage (34) un évidement en forme de fente (80) dans lequel la section filetée (82) du boulon de serrage (36), traversant l'écrou (38) est insérable et serrable contre l'écrou (38).

3. Collier de serrage selon la revendication 1 ou 2,
**caractérisé en ce**
**que** l'embout de raccordement (14) présente une section cylindrique (26) qui est conçue de sorte à ce que la section cylindrique s'engage dans l'orifice (24) quand l'embout de raccordement (14) est orienté vers l'orifice (24).

4. Collier de serrage selon au moins une des revendications précédentes,
**caractérisé en ce**
**qu'**est constituée dans le prolongement de la première et de la seconde section (16, 18) en forme de bride une saillie (64, 66) qui présente une longueur de sorte qu'en cas de pivotement du bras de serrage (32, 34), l'élément de sûreté (60, 62) cogne contre la saillie (64, 66).

5. Collier de serrage selon au moins la revendication 1,
**caractérisé en ce**
**que** la seconde section terminale (78) du second bras de serrage (34) est constituée en forme de bride et forme une surface d'appui (84) pour l'écrou (38) ou une bride (86) partant de celui-ci, laquelle surface est orientée par rapport à un axe longitudinal (76) de l'embout de raccordement (14) de sorte que la section filetée (82) du boulon de serrage (36) orienté par le biais de l'écrou (38) s'étend avec son axe longitudinal (88) perpendiculairement à l'axe longitudinal (76) de l'embout de raccordement (14).

6. Collier de serrage selon au moins une des revendications précédentes,
**caractérisé en ce**
**que** chaque étrier (48, 50) repose contre un renfoncement (52, 54) constitué dans la première ou seconde section (16, 18) de l'élément de boîtier (12) et que le renfoncement (52, 54) de la première ou seconde section (16, 18) en forme de bride de l'élément de boîtier (12) est délimité côté bord respectivement par une saillie (56, 58), telle qu'un ergot, pour bloquer l'étrier (52, 54).

7. Collier de serrage selon au moins une des revendications précédentes,
**caractérisé en ce**
**que** la seconde section terminale (68) du premier bras de serrage (32) est constituée en forme de bride et forme une surface d'appui (72) présentant la découpe (70), sachant que les surfaces d'appui (72, 84) des secondes sections terminales (68, 78) s'étendent parallèlement l'une par rapport à l'autre et par rapport à l'axe longitudinal (76) de l'embout de raccordement (14) et présentent de préférence un écart entre elles qui correspond essentiellement au diamètre du premier tuyau (22).

8. Collier de serrage selon au moins une des revendications précédentes,
**caractérisé en ce**
**que** les bras de serrage (32, 34) sont disposés symétriquement par rapport à l'axe longitudinal (76) de l'embout de raccordement (14).

9. Collier de serrage selon au moins une des revendications précédentes,
**caractérisé en ce**
**que** la seconde section terminale (68, 78) du premier ou du second bras de serrage (32, 34) présente respectivement côté tuyau une surface de serrage (90, 92) qui repose, à l'état serré, sur la surface du premier tuyau (22).

10. Collier de serrage selon au moins une des revendications précédentes,
**caractérisé en ce**
**que** la première et la seconde section (16, 18) sous-tendent côté supérieur un plan commun qui s'étend perpendiculairement à l'axe longitudinal (76) de l'embout de raccordement (14) et parallèlement à l'axe longitudinal du premier tuyau (22).

11. Collier de serrage selon au moins une des revendications précédentes,
**caractérisé en ce**
**que** le boulon de serrage (36) est conçu sous forme de boulon à tête bombée et collet carré ou comme vis à tête marteau ou en T.
